# EUROPEAN PATENT SPECIFICATION

(11) **EP 2 848 038 B1**
(45) Date of publication and mention of the grant of the patent: **03.02.2016**
(21) Application number: 12721489.8
(22) Date of filing: 10.05.2012
(51) Int. Cl.: H04W 36/00, H04W 36/22

(54) **RESETTING MOBILITY PARAMETERS BEING ASSOCIATED WITH A HANDOVER PROCEDURE**
RÜCKSTELLUNG VON MOBILITÄTSPARAMETERN IN ZUSAMMENHANG MIT EINEM ÜBERGABEVERFAHREN
RÉINITIALISATION DES PARAMÈTRES DE MOBILITÉ QUI SONT ASSOCIÉS À UNE PROCÉDURE DE TRANSFERT INTERCELLULAIRE

(43) Date of publication of application: 18.03.2015
(73) Proprietor: Nokia Solutions and Networks Oy, 02610 Espoo (FI)
(72) Inventor: WALDHAUSER, Richard, 81249 München (DE); LASELVA, Daniela, DK-9270 Klarup (DK); LOBINGER, Andreas, 85567 Grafing (DE); PEDERSEN, Klaus Ingemann, DK-9000 Aalborg (DK); SARTORI, Cinzia, 80634 Munchen (DE); VIERING, Ingo, 81541 Munich (DE); WEGMANN, Bernhard, 83607 Holzkirchen (DE); KLEIN, Axel, 81737 München (DE)
(74) Representative: Borgström, Markus
(86) International application number: PCT/EP2012/058603
(87) International publication number: WO 2013/167187

(56) References cited:
- ALCATEL-LUCENT ET AL: "Configuration adaptation for MLB on X2", 3GPP DRAFT; R3-093365, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Jeju; 20091109, 9 November 2009 (2009-11-09), XP050392777, [retrieved on 2009-11-19]
- NOKIA SIEMENS NETWORKS: "Clarification of procedures defined for MLB purposes", 3GPP DRAFT; R3-111938 NSN_SON_RES-STAT-REPORT_DISC, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Athens, Greece; 20110822, 9 September 2011 (2011-09-09), XP050541567, [retrieved on 2011-09-09]
- NOKIA SIEMENS NETWORKS: "Clarification of procedures defined for MLB purposes", 3GPP DRAFT; R3-112301 REV-R3-111940_NSN_SON_RES-STAT-REPORT_R10, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Athens, Greece; 20110822, 9 September 2011 (2011-09-09), XP050541920, [retrieved on 2011-09-09]
- KYOCERA CORPORATION: "Handover configuration change for MRO", 3GPP DRAFT; R3-100840, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. San Francisco, USA; 20100222, 11 February 2010 (2010-02-11), XP050424536, [retrieved on 2010-02-11]
- ZTE: "Enhancement on the Mobility Settings Change procedure", 3GPP DRAFT; R3-100190, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Valencia, Spain; 20100118, 15 January 2010 (2010-01-15), XP050424053, [retrieved on 2010-01-15]
- SAMSUNG: "Adding mobility setting negotiation procedure for MLBO", 3GPP DRAFT; R3-092418, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Miyazaki; 20091012, 12 October 2009 (2009-10-12), XP050391927, [retrieved on 2009-10-02]

## Description

### Field of invention

The present invention relates to the field of cellular networks, especially to self-organizing networks, and in particular to networks being able to perform mobility robustness optimization and mobility load balancing.

### Art Background

In cellular mobile systems, especially the wireless broadband system LTE, short for 'Long Term Evolution', which is standardized by 3GPP, Self-Organizing Networks (SON) are introduced. In such SONs, self optimization may be applied. Two of this optimization functions are mobility robustness optimization (MRO) and mobility load balancing (MLB).

MRO is responsible to optimize the handover behaviour between neighbour cells with respect to minimizing the number of radio link failures (RLF) that are caused by misaligned handover parameters leading to too late handovers, handovers that are done too early or that are done to wrong cells. Also unnecessary handovers from LTE to UMTS/GERAN can be detected, although these will not cause RLFs. The correction of these problems may require adjusting the trigger for the handover decisions between two cells, i.e., the event when a radio node decides that a specific user equipment (UE) being currently served by this radio node has to be handed over to a radio cell which is under control of a neighbor radio node. Depending on the nature of the detected problem, it may help to trigger this handover earlier or later. If a self optimizing functionality decides that the modification of the handover trigger needs to be coordinated with the neighbor radio node then this can be done by means of a Mobility Settings Change procedure.

The MLB functionality can be used by a radio node recognizing a high load in one of his radio cells. For this purpose MLB allows for requesting information about the load situation of relevant cells controlled by neighbor radio nodes. If the received load information indicates, that a cell of the neighbor radio node has sufficient resources to serve UEs that are currently served by the overloaded cell. In that case, the overloaded cell may select suitable candidates UEs that can also be served by the neighbor cell and handover these UEs to this cell of the neighbor radio node. It may be necessary to modify the trigger for handover decision for both the overload serving cell and the low or unloaded neighbor cell in order to avoid that the target cell handovers the UE back to the overloaded cell. This negotiation can be done using a Mobility Settings Change procedure.

Both MRO and MLB may modify the trigger for the handover decision to solve the MRO or MLB problem, respectively.

In common systems it is possible, with the Mobility Settings procedure, to change the handover trigger threshold by a delta value between -10 and + 10 dB with a granularity of 0.5 dB. The handover trigger corresponds to the threshold at which a cell initializes the handover preparation procedure towards a specific neighbor cell. A positive delta value means the handover is proposed to take place later.

In case that both MLB and MRO have already changed the mobility settings for a cell border between two eNBs or base stations and, for any reasons, one of the two involved eNBs has a problem with either one of the MLB or the MRO functionalities, this eNB may want to deactivate and/or reset the corresponding functionality and invalidate related mobility setting changes that were agreed up to now. The problem is that there is no mechanism that guarantees a properly reset of either the MLB or the MRO related delta values while keeping the agreed status for the other functionality.

R3-093365; Alcatel-Lucent et al, "Configuration adaptation for MLB on X2"; 3GPP TSG-RAN meeting #66; Jeju, Korea; 09-13.11.2009) is a standard related document relating to the introduction of an additional procedure relating to mobility setting changes. According to this document, a new procedure defining a "mobility settings change with corresponding messages and information elements is to be introduced into the current Class 1 Elementary procedures for the X2AP.

There may be a need for an improved and flexible system and method being adapted to reset the mobility settings being associated with MRO or MLB.

### Summary of the Invention

This need may be met by the subject matter according to the independent claims. Advantageous embodiments of the present invention are described by the dependent claims.

According to a first aspect of the invention there is provided a method for resetting mobility parameters being associated with a handover procedure for a user equipment between a source cell and a target cell within a cellular network system. The cellular network system comprises the source cell and at least one neighboring target cell. The handover procedure is initiated by a trigger value, wherein a trigger value is assigned to each of the at least one neighboring target cell in relation to the source cell. The trigger value is dependent on mobility parameters being adaptable by a mobility robustness optimization algorithm and is dependent on mobility parameters being adaptable by a mobility load balancing algorithm. The method comprises resetting the mobility parameters for the mobility robustness optimization algorithm or the mobility load balancing algorithm, generating a message comprising information about the reset of the mobility parameters being associated with the mobility robustness optimization algorithm or the mobility load balancing algorithm and comprising information about the associated algorithm, and transmitting the message between the source cell and the at least one neighboring cell for resetting the mobility parameters of the associated algorithm based on the received message. The mobility parameters may have been set for the at least one neighboring target cell in relation to the source cell or vice versa by the associated algorithm.

This aspect of the invention is based on the idea to provide a reliable possibility of resetting the mobility settings being associated either with mobility robustness optimization (MRO) or with mobility load balancing (MLB) by forcing a first base station via messages received from a second base station to reset the associated mobility settings. This may be possible by providing the first base station with the information about the associated cause, i.e., the associated functionality (MRO or MLB). Before this method is carried out, the mobility settings may have been adapted either by mobility robustness optimization (MRO) or by mobility load balancing (MLB).

The method may be performed by the base station serving or controlling the source cell or by a base station serving or controlling a target, neighbor, cell. The method may also be performed by both base stations.

Using a Mobility Settings procedure, the eNB or base station which wants to invalidate or reset the mobility setting sends a Mobility Change Request to the neighbor eNB with a value that exactly invalidates the changes that have been made up to now. The disadvantage of this method is that the neighbor node is not obliged to accept the requested change. The procedure is designed for negotiation purpose and it is up to the neighbor not to accept the proposed change by returning a Mobility Change Failure message, i.e., with this method, it cannot be guaranteed that the changes that have been agreed up to now can be rolled back.

Even though the cell-pair related parameter adjustment is carried out by Mobility Change Procedures provided X2 Application Protocol, the X2 Reset procedure, i.e., the complete reset of X2 interface for the considered peer does not help. The purpose of the existing X2 Reset procedure is to align the resources in the two base stations in the event of an abnormal failure. This procedure may be expected to be successful at any time. The receiving base station will delete all the context information related to the requesting base station, except the application level configuration data exchanged during the X2 Setup or eNB Configuration Update procedures, and release the corresponding resources. However, the mobility configuration that was set by using the Mobility Change procedure is still maintained after performing the existing X2 Reset procedure.

In contrast to these methods, the herein described method provides a more selective reset mechanism which is in particular adapted to the SON functions MRO and MLB. It may allow invalidating or resetting either the mobility parameters that has been generated by the MRO function, or the mobility parameters that has been generated by the MLB function. Thus, the settings of only one of MRO and MLB will be reset or invalidated wherein the settings corresponding to the other algorithm will be maintained. Further, as the base station which transmits the message enforces the other base station to carry out this resetting, the alignment between two cells for the respective algorithm may be maintained.

"Mobility Robustness Optimization" in this context may refer to any kind of algorithm being used for an optimization of mobility by adapting parameters for speeding up or delaying handovers.

"Mobility load balancing" in this context may refer to any kind of algorithm being used for changing the radio coverage of cells, in particular for load balancing by moving cell boundaries so that handovers can be carried out earlier or later, where the radio coverage or cell boarder is virtually changed providing to the connected UEs appropriate cell individual offset values towards the relevant serving cell's neighbors.

"Mobility parameters" in this context may denote any kind of parameters being able to adapt the handover procedures. The mobility parameters may be for instance parameters characterizing the load or coverage of a cell, in particular in relation to another cell. Each algorithm may have its own mobility parameters. The algorithms may also share some of the parameters or may have the same parameters. The mobility parameters are used for adapting the "Trigger value". The trigger value may be a threshold value triggering a measurement report by the UE that in turn initiates a handover procedure.

"Resetting" in this context may denote for instance invalidating previous changes to the mobility parameters or setting the mobility parameters to default values.

According to an embodiment of the invention, the method further comprises adapting the trigger value in response to the reset of the mobility parameters of the associated algorithm.

The trigger value is a value which depends on mobility parameters of the MLB algorithm as well as on mobility parameters of the MRO algorithm. As the message being transmitted between the source cell and the target cell comprises information about the algorithm, the mobility parameters of which are to be reset, the trigger value can be adapted taking into account the reset of the parameters of the one algorithm and the maintaining of the parameters of the other algorithm. The message may be an existing message which is adapted to comprise the necessary information for the herein described method or may be a new kind of message comprising the necessary information for the herein described method.

According to a further embodiment of the invention, the method further comprises determining whether a reset of the mobility parameters is necessary for the mobility robustness optimization algorithm or the mobility load balancing algorithm.

Before resetting the mobility parameters of one algorithm and before generating the message, one of the cells, or moreover one of the serving base stations, may realize that the parameters of one of the algorithms may need to be adapted. This may be the case due to a change of the network situation, like change of the load, coverage, number of UEs within the cells. Based on such a determination, one algorithm might need to reset of the mobility parameters whereas the other algorithm may still use the determined mobility parameters.

According to a further embodiment of the invention, resetting the mobility parameters of the associated algorithm comprises invalidating a delta value, which has been generated by the associated algorithm.

According to this embodiment, either the delta value that has been generated by the MRO function, or the delta value that has been generated by the MLB function may be reset or invalidated. "Delta value" may denote the currently resulting delta for one of the algorithms that has been summed up over the sequence of successful mobility setting procedures until the herein described method enforced. The method transfers the information about invalidating the delta value belonging to either the MLB or the MRO functionality.

According to a further embodiment of the invention, a delta value has been generated by each of the mobility robustness optimization algorithm and the mobility load balancing algorithm, and an effective delta value for the handover procedure between the source cell and the at least one neighboring target cell consists of a sum of the delta value of the mobility robustness optimization algorithm and the delta value of the mobility load balancing algorithm.

Each of the algorithms adapts its own delta value based on current network conditions. An overall delta value, so called effective delta value, can then be generated based on the two single delta values by summing up the single delta values.

According to a further embodiment of the invention, the trigger value for initiating the handover procedure is adapted by the effective delta value.

The trigger value (threshold) may be modified by the effective delta value. This may be done by adding the effective delta value to the trigger value and thus, increasing or decreasing the threshold for triggering the handover procedure.

According to a further embodiment of the invention, invalidating the delta value comprises setting the delta value to zero.

In one embodiment, a default value for the delta value may be assumed to be zero. Invalidating the delta value thus may correspond to setting the delta value to the default value, which may be zero in this case. The default value may also be any other value.

According to a further embodiment of the invention, the message is a mobility change cancel message comprising information for forcing the at least one neighboring cell to reset the mobility parameters of the associated algorithm.

For the message, a new type of message, the mobility change cancel message, may be used for transmitting the reset information between the cells or the corresponding base stations. The message may be able to force the receiving base station or cell to reset the mobility parameters of the associated algorithm and thus to adapt the trigger value. Therefore, no response or confirmation message might be needed.

According to a further embodiment of the invention, the message comprises an information element indicating the reset of the mobility parameters of the associated algorithm.

Such an information element (IE) may be inserted in any existing message, for instance may be added to the existing mobility change procedure. For example, the Mobility Change Request message may have this IE "Mobility Change Cancel" which, if present, or set to true, may indicate to the receiving base station to reset the mobility parameters for the cell and the SON functionality (e.g. MRO or MLB). The cell ID and the cause, the latter indicating the SON functionality, may already be contained in the message. As when using the mobility change cancel message, the receiving base station may have to obey the request for a Mobility Change Cancel.

In a further implementation, the existing mobility change procedure may be used for invalidating the mobility parameters. Here, an existing message may be used, wherein an IE may be set to a specific value. According to this implementation, the semantics of the existing IE(s) may be changed. For instance, a base station may send a Proposed Mobility Parameters IE with a special value, e.g., the Handover Trigger Change value "0", indicating to the receiving base station to invalidate the mobility parameters for the cell and the SON functionality (e.g., MRO or MLB) given in the request. The receiving base station may have to obey the request to invalidate the corresponding mobility parameters.

According to a second aspect of the invention, there is provided a base station being adapted to reset mobility parameters being associated with a handover procedure for a user equipment between a source cell and a target cell within a cellular network system, the cellular network system comprising the source cell and at least one neighboring target cell, wherein the handover procedure is initiated by a trigger value, wherein a trigger value is assigned to each of the at least one neighboring target cell in relation to the source cell, wherein the trigger value is dependent on mobility parameters being adaptable by a mobility robustness optimization algorithm and is dependent on mobility parameters being adaptable by a mobility load balancing algorithm. The base station comprises a reset unit being adapted to reset the mobility parameters for the mobility robustness optimization algorithm or the mobility load balancing algorithm, a generation unit being adapted to generate a message comprising information about the reset of the mobility parameters being associated with the mobility robustness optimization algorithm or the mobility load balancing algorithm and comprising information about the associated algorithm, and a transmitting unit being adapted to transmit the message from the source cell to the at least one neighboring cell for resetting the mobility parameters of the associated algorithm based on the received message.

The term "base station" in this context may denote any kind of physical entity being able to communicate with a user equipment or any other network device. The base station may be any type of access point or point of attachment, which is capable of providing a wireless access to a cellular network system. Thereby, the wireless access may be provided for a user equipment or for any other network element, which is capable of communicating in a wireless manner. The base station may be a NodeB, eNB, home NodeB or HeNB, or any other kind of access point. The base station may in particular be used for a B4G, LTE or 3GPP cell and communication.

The base station may comprise a receiving unit, for example a receiver as known by a skilled person. The base station may also comprise a transmitting or sending unit, for example a transmitter. The receiver and the transmitter may be implemented as one single unit, for example as a transceiver. The transceiver or the receiving unit and the sending unit may be adapted to communicate with the user equipment or any other network device via an antenna.

The base station further comprises a reset unit and a generation unit. The reset unit and the generation unit may be implemented as single units or may be implemented for example as part of a standard control unit, like a CPU or a microcontroller.

According to a further aspect of the invention, a further base station may be provided which is adapted to communicate with a base station having the above mentioned features.

According to an embodiment of the invention, the further base station may adapted to receive the message and to reset the mobility parameters of the associated algorithm based on the received message.

The base station and the further base station may both be able to generate a reset message and to transmit the message to each other. Thus, the reset procedure may be started by each of the base stations, wherein the other base station may be forced to reset the mobility parameters based on the received message.

According to a third aspect of the invention, there is provided a user equipment being adapted to communicate with a base station as described above.

The user equipment (UE) may be any type of communication end device, which is capable of connecting with the described base station. The UE may be in particular a cellular mobile phone, a Personal Digital Assistant (PDA), a notebook computer, a printer and/or any other movable communication device. In particular, in the context of this application, a UE may be any kind of communication device, for example a smart phone, being able to perform handovers based on the configuration as provided by the base station.

The user equipment may comprise a receiving unit or receiver which is adapted for receiving signals from the base stations. The user equipment may comprise a transmitting unit for transmitting signals. The transmitting unit may be a transmitter as known by a skilled person. The receiver and the transmitting unit may be implemented as one single unit, for example as a transceiver. The transceiver or the receiver and the transmitting unit may be adapted to communicate with the base stations via an antenna.

The user equipment may further comprise a control unit being adapted to control handovers. The control unit may be implemented as a single unit or may be implemented for example as part of a standard control unit, like a CPU or a microcontroller.

According to a fourth aspect of the invention, there is provided a cellular network system. The cellular network system comprises a base station as described above.

Generally herein, the method and embodiments of the method according to the first aspect may include performing one or more functions described with regard to the other aspects or an embodiment thereof. Vice versa, the base station, user equipment or cellular network system and embodiments thereof according to the other aspects may include units or devices for performing one or more functions described with regard to the first aspect or an embodiment thereof.

According to a fifth aspect of the herein disclosed subject-matter, a computer program for resetting mobility parameters being associated with a handover procedure is provided, the computer program being adapted for, when executed by a data processor assembly, controlling the method as set forth in the first aspect or an embodiment thereof.

As used herein, reference to a computer program is intended to be equivalent to a reference to a program element and/or a computer readable medium containing instructions for controlling a computer system to coordinate the performance of the above described method.

The computer program may be implemented as computer readable instruction code by use of any suitable programming language, such as, for example, JAVA, C++, and may be stored on a computer-readable medium (removable disk, volatile or non-volatile memory, embedded memory/processor, etc.). The instruction code is operable to program a computer or any other programmable device to carry out the intended functions. The computer program may be available from a network, such as the World Wide Web, from which it may be downloaded.

The herein disclosed subject matter may be realized by means of a computer program respectively software. However, the herein disclosed subject matter may also be realized by means of one or more specific electronic circuits respectively hardware. Furthermore, the herein disclosed subject matter may also be realized in a hybrid form, i.e. in a combination of software modules and hardware modules.

In the above there have been described and in the following there will be described exemplary embodiments of the subject matter disclosed herein with reference to a cellular network system, a base station, a user equipment and a method of for resetting mobility parameters being associated with a handover procedure. It has to be pointed out that of course any combination of features relating to different aspects of the herein disclosed subject matter is also possible. In particular, some embodiments have been described with reference to apparatus type embodiments whereas other embodiments have been described with reference to method type embodiments. However, a person skilled in the art will gather from the above and the following description that, unless otherwise notified, in addition to any combination of features belonging to one aspect also any combination between features relating to different aspects or embodiments, for example even between features of the apparatus type embodiments and features of the method type embodiments is considered to be disclosed with this application.

The aspects and embodiments defined above and further aspects and embodiments of the present invention are apparent from the examples to be described hereinafter and are explained with reference to the drawings, but to which the invention is not limited.

### Brief Description of the Drawing

Figure 1 shows a cellular network system according to an exemplary embodiment of the present invention.
Figure 2 shows a message flow diagram for a successful mobility change request.
Figure 3 shows a message flow diagram for a failed mobility change request.
Figure 4 shows a message flow diagram for a reset request.
Figure 5 shows a message flow diagram for a mobility change chancel according to an exemplary embodiment of the invention.
Figure 6 shows a cellular network system according to an exemplary embodiment of the invention.

It is noted that in different figures, similar or identical elements are provided with the same reference signs.

### Detailed Description

In the following, embodiments of the herein disclosed subject matter are illustrated with reference to the drawings and reference to aspects of current standards, such as LTE, and their further developments. However, such reference to current standards is only exemplary and should not be considered as limiting the scope of the claims.

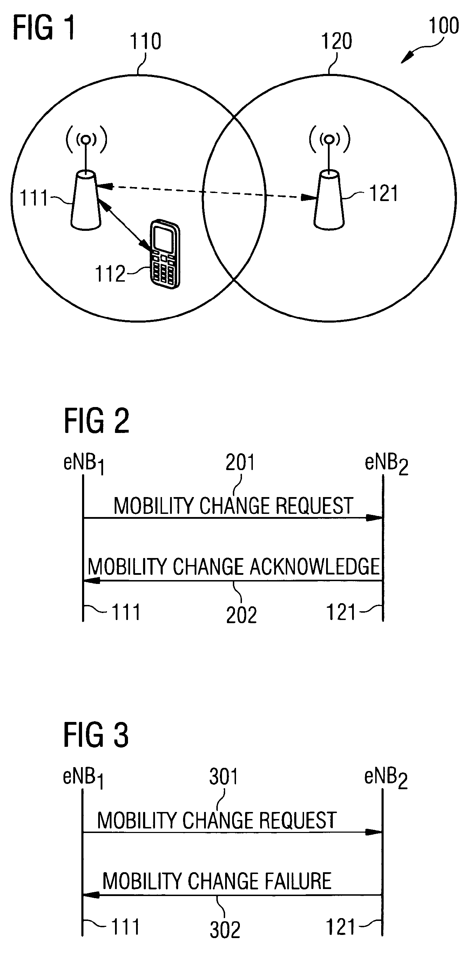

Figure 1 shows a cellular network system 100. The cellular network system comprises a source cell 110 and a target cell 120 being neighbored to the source cell. The cellular network system 100 further comprises a base station 111 being assigned to the source cell 110 and a further base station 121 being assigned to the target cell 120. A user equipment 112 is served by the base station 111 and can be handed over to the further base station 121 of the target cell 120. The base station 111 and the further base station 121 are adapted to communicate with each other.

Each of the base stations 111, 121 is adapted to reset mobility parameters being associated with a handover procedure for the user equipment 112 between the source cell 110 and the target cell 120. The handover procedure is initiated by a trigger value or threshold. A trigger value is assigned to each of the at least one neighboring target cell 120 in relation to the source cell 110. The trigger value is dependent on mobility parameters being adaptable by a mobility robustness optimization (MRO) algorithm and is dependent on mobility parameters being adaptable by a mobility load balancing (MLB) algorithm.

When one of the base stations determines that it is necessary to reset the mobility parameters of one of the algorithms, this base station 111, 121 can reset the mobility parameters for the mobility robustness optimization algorithm or the mobility load balancing algorithm. Then, this base station generates a message comprising information about the reset of the mobility parameters being associated with the mobility robustness optimization algorithm or the mobility load balancing algorithm and comprising information about the associated algorithm. Subsequently, the base station111, 121 transmits the message to the other base station. The other base station is forced to reset the mobility parameters of the associated algorithm based on the received message accordingly.

Thus, the herein described method and system provides a solution to reset the effect of MRO and MLB on the setting of the mobility parameter settings separately.

As already explained above, MRO is responsible to optimize the handover behavior between neighbor cells with respect to minimizing the number of radio link failures (RLF) that are caused by misaligned handover parameters leading to too late handovers, handovers that are done too early or that are done to wrong cells. Also unnecessary handovers from LTE to UMTS/GERAN can be detected, although these will not cause RLFs. The correction of these problems may require adjusting the trigger for the handover decisions between two cells, i.e. event when a radio node decides that a specific user equipment (UE) being currently served by this radio node has to be handed over to a radio cell which is under control of a neighbor radio node. Depending on the nature of the detected problem it may help to trigger this handover earlier or later. If a self optimizing functionality decides that the modification of the handover trigger needs to be coordinated with the neighbor radio node then this can be done by means of the Mobility Settings Change procedure.

The MLB functionality can be used by a radio node recognizing a high load in one of his radio cells. For this purpose MLB allows for requesting information about the load situation of relevant cells controlled by neighbor radio nodes. If the received load information indicates, that a cell of the neighbor radio node has sufficient resources to serve UEs that are currently served by the overloaded cell. In that case the overloaded cell may select suitable candidates UEs that can also be served by the neighbor cell and handover these UEs to this cell of the neighbor radio node. It may be necessary to modify the trigger for handover decision for both the overload serving cell and the low or unloaded neighbor cell in order to avoid that the target cell handovers the UE back to the overloaded cell. This negotiation can be done using the Mobility Settings Change procedure.

Both MRO and MLB may modify the trigger for the handover decision to solve the MRO or MLB problem, respectively. With the Mobility Settings procedure, it is possible to change the handover trigger threshold by a delta value between -10 and + 10 dB with a granularity of 0.5 dB. The Handover Trigger corresponds to the threshold at which a cell initializes the handover preparation procedure towards a specific neighbor cell. A positive delta value means the handover is proposed to take place later.

It should be assumed that both MLB and MRO have already changed the mobility settings for a cell border between two eNBs or base stations. Then, for any reasons, one of the two involved eNBs has a problem with either one of the MLB or the MRO functionalities and wants to deactivate and/or reset the corresponding functionality and invalidate related mobility setting changes that were agreed up to now. The problem is that there is no mechanism that guarantees a properly reset of either the MLB or the MRO related delta values while keeping the agreed status for the other functionality.

Figures 2 and 3 illustrate a Mobility Settings procedure. The eNB which wants to invalidate the mobility setting sends a Mobility Change Request 201, 301 to the neighbor eNB with a value that exactly invalidates the changes that have been made up to now. The disadvantage of this method is that the neighbor node is not obliged to accept the requested change. The procedure is designed for negotiation purpose and it is up to the neighbor to accept the change by returning a Mobility Change Acknowledge message 202 or to not accept the proposed change by returning a Mobility Change Failure message 302. Thus, with this method it cannot be guaranteed that the changes that have been agreed up to now can be rolled back.

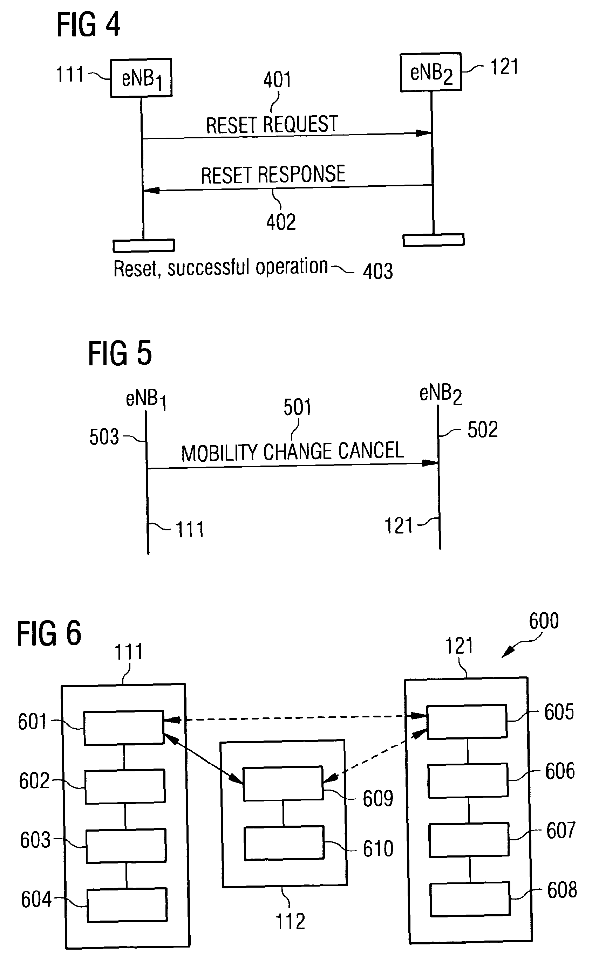

Figure 4 illustrates a X2 Reset procedure. The purpose of the Reset procedure is to align the resources in the two base stations in the event of an abnormal failure. The procedure resets the X2 interface. One base station sends a Reset Request 401 and the other sends a Reset Response 402. This procedure is expected to be successful at any time (403).

The receiving base station should delete all the context information related to the requesting base station, except the application level configuration data exchanged during the X2 Setup or eNB Configuration Update procedures, and release the corresponding resources. However, the mobility configuration that was set by using the Mobility Change procedure should be maintained after performing the Reset procedure. This means the Reset procedure cannot be used to reset the mobility changes.

Another possibility would be the Mobility Setting Cancel message. It is designed to enable a mobility settings negation which involves more than two neighbor eNBs which might have been useful if mobility settings were changed which have impact on more than one cell border (e.g., the mobility parameter Time to Trigger is valid for the complete cell and thus changing this value has impact to all neighbor eNBs that have a border to this cell). The idea is to have three phases in the procedure. First, the eNB sends a change request to all involved neighbor nodes. Second, the neighbors indicate whether or not they can accept the change. Third, depending on the received information in the second phase the proposed changes are enforced or invalidate. This approach is not capable to invalidate mobility parameters (for instance in the form of an effective delta value which has summed up over the overall sequence of mobility setting procedures).

The herein described method and system provides a method allowing for a more selective reset mechanism which is specifically adapted to the SON functions MRO and MLB. It allows invalidating either the effective delta value that has been generated by the MRO function, or the effective delta value that has been generated by the MLB function. "Effective delta value" means the currently resulting delta that has been summed up over the sequence of successful mobility setting procedures until the herein described method is enforced. The method transfers the information about invalidating the effective delta value belonging to either the MLB or the MRO functionality.

Both eNBs that are involved in the Mobility Settings Change procedure for a cell border are, separately for MLB and for MRO, maintaining a summed up delta values for the agreed changes. This is possible because of the mandatory cause information in the Mobility Settings Request message indicating the SON functionality issuing the request, i.e., the cause value is either "Load Balancing" or "Handover Optimization". The resulting effective delta value, which has to be enforced for the mobility parameter setting is the sum of the MRO and MLB delta value.

If one of the eNBs comes to the conclusion that the mobility setting changes caused up to now by either MLB or MRO has to be invalidated then it invalidates the corresponding MRL or MRO related delta value (503 in Figure 5) and enforces the new resulting delta value and sends a new message, e.g., a Mobility Change Cancel message 501, to the neighbor node which also has to invalidate the corresponding delta value (502 in Figure 5) for the mobility setting in order to have a aligned handover behavior at the cell border. Similar to the Mobility Change Request message, the Mobility Change Cancel message contains information to uniquely identify the affected cell pair (e.g. a eNB1-Cell-ID and a eNB2-Cell-ID) and a cause value to indicate the delta value which has to be invalidated, i.e. the delta value generated by MRO or MLB, respectively. Invalidating may mean to set the corresponding delta value to "0".

Upon reception of the Mobility Change Cancel message, the eNB also invalidates the corresponding delta value and enforces the new resulting effective delta value for the mobility parameter settings of this cell border. Thus, the Mobility Change Cancel message is supposed to be successfully received and executed anytime.

The advantage of this method is that the cancelation can specifically be applied for the function where problems have recognized and, in contrast to the Mobility Change Request message, the changes are supposed to be applied and executed by the receiving eNB.

For example, the MRO functionality may have already evaluated and enforced a mobility setting for optimized handover behavior between two neighbors. Then for one of the mobility optimized cells an overload situation is recognized and the MLB function changes the mobility settings accordingly on top of the mobility optimized mobility settings. If now a problem or a malfunction is observed with the MLB, then it is possible to invalidate the changes made by the MLB functionality and immediately re-enforce the mobility settings that had proofed optimized handover behavior before the MLB functionality was activated. This may provide an advantage because it can be expected that optimized handover behavior may typically be achieved as a result of a longer running MRO activity.

In one implementation, a new information element (IE) is added to the mobility change procedure. For example, the Mobility Change Request message comprises a new IE "Mobility Change Cancel" which, if present, or set to true, indicates to the receiving eNB to invalidate the effective delta value for the cell and the SON functionality (e.g. MRO or MLB). Cell-ID and cause, the latter indicating the SON functionality, are already contained in the message. The information of the eNB1 Mobility Parameters and eNB2 Proposed Mobility Parameters IEs may be irrelevant in that case. The receiving eNB2 may have to obey the request for a Mobility Change Cancel.

In a further implementation, the mobility change procedure may be used for invalidating the effective delta value. This implementation changes the semantics of the existing IE(s) rather than adding a new IE, e.g., eNB1 sending a Proposed Mobility Parameters IE with a special value, e.g., the Handover Trigger Change value "0", indicates to the receiving eNB2 to invalidate the effective delta value for the cell and the SON functionality (e.g. MRO or MLB) given in the request. The receiving eNB2 may have to obey the request to invalidate corresponding effective delta value.

Figure 6 shows a cellular network system 600 according to an exemplary embodiment of the invention. The cellular network system comprises a base station 111, a further base station 120 and a user equipment 112. The user equipment 112 is served by a source cell being assigned to the base station 111 and can be handed over to a target cell being neighboured to the source cell and being served by the further base station 121.

Each of the base stations 111, 121 is adapted to reset mobility parameters being associated with a handover procedure for the user equipment 112 between the source cell and the target cell. The handover procedure is initiated by a trigger value, wherein one trigger value is assigned to each of the at least one neighboring target cell in relation to the source cell. The trigger value is dependent on mobility parameters being adaptable by a mobility robustness optimization algorithm and is dependent on mobility parameters being adaptable by a mobility load balancing algorithm.

Each of the base station 111, 121 comprises a reset unit 602, 606, a generation unit 603, 607, a transceiver 601, 605 and a control unit 604, 608.

The reset unit 602, 606 is adapted to reset the mobility parameters for the mobility robustness optimization algorithm or the mobility load balancing algorithm. The generation unit 603, 607 is adapted to generate a message comprising information about the reset of the mobility parameters being associated with the mobility robustness optimization algorithm or the mobility load balancing algorithm and comprising information about the associated algorithm.

After generation of the message, a transmitting unit is adapted to transmit the message between the base stations for resetting the mobility parameters of the associated algorithm based on the received message. Each of the base stations 111, 121 may comprise a receiving unit, for example a receiver as known by a skilled person. The base stations 111, 121 may also comprise a transmitting or sending unit, for example a transmitter. The receiver and the transmitter may be implemented as one single unit, for example as a transceiver 601, 605. The transceiver or the receiving unit and the sending unit may be adapted to communicate with the user equipment or another network element, for instance the other base station, via an antenna.

The reset unit 602, 606, the generation unit 603, 607 and the control unit 604, 608 may be implemented as single units or may be implemented for example as part of a standard control unit, like a CPU or a microcontroller.

The control unit 604, 608 may be adapted to receive the message and to reset the mobility parameters of the associated algorithm based on the received message. Thus, each base station may on the one hand start the resetting procedure by itself and may on the other hand react when receiving the message for reset from the other base station.

The base stations may be any type of access point or point of attachment, which is capable of providing a wireless access to a cellular network system. Thereby, the wireless access may be provided for the user equipment, or for any other network element, which is capable of communicating in a wireless manner. The base stations may be a NodeB, eNB, home NodeB or HeNB, or any other kind of access point.

The user equipment (UE) may be any type of communication end device, which is capable of connecting with the described base stations. The UE may be in particular a cellular mobile phone, a Personal Digital Assistant (PDA), a notebook computer, a printer and/or any other movable communication device.

The user equipment 112 may comprise a receiving unit or receiver which is adapted for receiving signals from the base stations. The user equipment may comprise a transmitting unit for transmitting signals. The transmitting unit may be a transmitter as known by a skilled person. The receiver and the transmitting unit may be implemented as one single unit, for example as a transceiver 609. The transceiver or the receiver and the transmitting unit may be adapted to communicate with the network element via an antenna.

The user equipment may further comprise a control unit 610 for controlling and configuring handovers based on information received from the base stations. The control unit may be implemented as a single unit or may be implemented for example as part of a standard control unit, like a CPU or a microcontroller.

Having regard to the subject matter disclosed herein, it should be mentioned that, although some embodiments refer to a "base station", "eNB", etc., it should be understood that each of these references is considered to implicitly disclose a respective reference to the general term "network component", "network element" or, in still other embodiments, to the term "network access node". Also other terms which relate to specific standards or specific communication techniques are considered to implicitly disclose the respective general term with the desired functionality.

It should further be noted that a base station as disclosed herein is not limited to dedicated entities as described in some embodiments. Rather, the herein disclosed subject matter may be implemented in various ways in various locations in the communication network while still providing the desired functionality.

According to embodiments of the invention, any suitable entity (e.g. components, units and devices) disclosed herein, e.g. the reset unit, are at least in part provided in the form of respective computer programs which enable a processor device to provide the functionality of the respective entities as disclosed herein. According to other embodiments, any suitable entity disclosed herein may be provided in hardware. According to other - hybrid - embodiments, some entities may be provided in software while other entities are provided in hardware.

It should be noted that any entity disclosed herein (e.g. components, units and devices) are not limited to a dedicated entity as described in some embodiments. Rather, the herein disclosed subject matter may be implemented in various ways and with various granularities on device level while still providing the desired functionality. Further, it should be noted that according to embodiments a separate entity (e.g. a software module, a hardware module or a hybrid module) may be provided for each of the functions disclosed herein. According to other embodiments, an entity (e.g. a software module, a hardware module or a hybrid module (combined software/hardware module)) is configured for providing two or more functions as disclosed herein.

It should be noted that the term "comprising" does not exclude other elements or steps. It may also be possible in further refinements of the invention to combine features from different embodiments described herein above. It should also be noted that reference signs in the claims should not be construed as limiting the scope of the claims.

### List of reference signs:

- 100: Cellular network system
- 110: Source cell
- 111: Base station
- 112: User equipment
- 120: Target cell
- 121: Further base station

- 201: Mobility change request
- 202: Mobility change acknowledge

- 301: Mobility change request
- 302: Mobility change failure

- 401: Reset request
- 402: Reset response
- 403: Successful reset operation

- 501: Mobility change cancel
- 502: Reset of mobility parameters
- 503: Reset of mobility parameters

- 600: Cellular network system
- 601: Transceiver of the base station
- 602: Reset unit of the base station
- 603: Generation unit of the base station
- 604: Control unit of the base station
- 605: Transceiver of the further base station
- 606: Reset unit of the further base station
- 607: Generation unit of the further base station
- 608: Control unit of the further base station
- 609: Transceiver of the user equipment
- 610: Control unit of the user equipment

## Claims

1. A method for resetting mobility parameters being associated with a handover procedure for a user equipment (112) between a source cell (110) and a target cell (120) within a cellular network system (100), the cellular network system (100) comprising the source cell (110) and at least one neighboring target cell (120), wherein the handover procedure is initiated by a trigger value, wherein a trigger value is assigned to each of the at least one neighboring target cell (120) in relation to the source cell (110), wherein the trigger value is dependent on mobility parameters being adaptable by a mobility robustness optimization algorithm and is dependent on mobility parameters being adaptable by a mobility load balancing algorithm, the method comprising
resetting the mobility parameters for the mobility robustness optimization algorithm or the mobility load balancing algorithm,
generating a message comprising information about the reset of the mobility parameters being associated with the mobility robustness optimization algorithm or the mobility load balancing algorithm and comprising information about the associated algorithm, and
transmitting the message between the source cell (110) and the at least one neighboring cell (120) for resetting the mobility parameters of the associated algorithm based on the received message, the method **characterized in that** resetting the mobility parameters of the associated algorithm comprises invalidating a delta value, which has been generated by the associated algorithm, wherein the delta value has been generated by each of the mobility robustness optimization algorithm and the mobility load balancing algorithm, and wherein an effective delta value for the handover procedure between the source cell (110) and the at least one neighboring target cell (120) consists of a sum of the delta value of the mobility robustness optimization algorithm and the delta value of the mobility load balancing algorithm and wherein the trigger value for initiating the handover procedure is adapted by the effective delta value.

2. The method as set forth in claim 1, further comprising adapting the trigger value in response to the reset of the mobility parameters of the associated algorithm.

3. The method as set forth in any one of the preceding claims, further comprising
determining whether a reset of the mobility parameters is necessary for the mobility robustness optimization algorithm or the mobility load balancing algorithm.

4. The method as set forth in claim 1, wherein invalidating the delta value comprises setting the delta value to zero.

5. The method as set forth in any one of the preceding claims, wherein the message is a mobility change cancel message comprising information for enforcing the source cell (110) or the at least one neighboring cell (120) to reset the mobility parameters of the associated algorithm.

6. The method as set forth in any one of the preceding claims, wherein the message comprises an information element indicating the reset of the mobility parameters of the associated algorithm.

7. A base station (111, 121) being adapted to reset mobility parameters being associated with a handover procedure for a user equipment (112) between a source cell (110) and a target cell (120) within a cellular network system (100), the cellular network system (100) comprising the source cell (110) and at least one neighboring target cell (120), wherein the handover procedure is initiated by a trigger value, wherein a trigger value is assigned to each of the at least one neighboring target cell (120) in relation to the source cell (110), wherein the trigger value is dependent on mobility parameters being adaptable by a mobility robustness optimization algorithm and is dependent on mobility parameters being adaptable by a mobility load balancing algorithm, the base station (111, 121) comprising
a reset unit (602, 606) being adapted to reset the mobility parameters for the mobility robustness optimization algorithm or the mobility load balancing algorithm,
a generation unit (603, 607) being adapted to generate a message comprising information about the reset of the mobility parameters being associated with the mobility robustness optimization algorithm or the mobility load balancing algorithm and comprising information about the associated algorithm, and
a transmitting unit (601, 605) being adapted to transmit the message between the source cell (110) and the at least one neighboring cell (120) for resetting the mobility parameters of the associated algorithm based on the received message, **characterised in that** the reset unit (602, 606) adapted to reset the mobility parameters of the associated algorithm is further adapted to invalidate a delta value, which has been generated by the associated algorithm, wherein the delta value has been generated by each of the mobility robustness optimization algorithm and the mobility load balancing algorithm, and wherein an effective delta value for the handover procedure between the source cell (110) and the at least one neighboring target cell (120) consists of a sum of the delta value of the mobility robustness optimization algorithm and the delta value of the mobility load balancing algorithm and wherein the trigger value for initiating the handover procedure is adapted by the effective delta value.

8. A cellular network system (100), the cellular network system (100) comprising at least one base station (111, 121) as set forth in claim 7.

## Patentansprüche

1. Verfahren zur Rückstellung von Mobilitätsparametern in Zusammenhang mit einem Übergabeverfahren für ein Benutzer-Equipment (112) zwischen einer Ursprungszelle (110) und einer Zielzelle (120) in einem Mobilfunknetzsystem (100), wobei das Mobilfunknetzsystem (100) die Ursprungszelle (110) und wenigstens eine benachbarte Zielzelle (120) umfasst, wobei das Übergabeverfahren durch einen Auslöserwert angestoßen wird, wobei ein Auslöserwert jeder der wenigstens einen benachbarten Zielzellen (120) in Relation zur Ursprungszelle (110) zugewiesen wird, wobei der Auslöserwert von Mobilitätsparametern abhängt, die durch einen Mobilitätsrobustheit-Optimierungsalgorithmus veränderbar sind, und von Mobilitätsparametern abhängt, die durch einen Mobilitäts-Lastverteilungsalgorithmus veränderbar sind, wobei das Verfahren umfasst,
die Mobilitätsparameter für den Mobilitätsrobustheit-Optimierungsalgorithmus oder den Mobilitäts-Lastverteilungsalgorithmus zurückzustellen,
eine Nachricht zu erzeugen, die Informationen über die Rückstellung der Mobilitätsparameter umfasst, die dem Mobilitätsrobustheit-Optimierungsalgorithmus oder dem Mobilitäts-Lastverteilungsalgorithmus zugeordnet sind, und die Informationen über den zugehörigen Algorithmus umfasst, und die Nachricht zwischen der Ursprungszelle (110) und der wenigstens einen Nachbarzelle (120) zu übertragen, um die Mobilitätsparameter des zugehörigen Algorithmus basierend auf der empfangenen Nachricht zurückzustellen, wobei das Verfahren **dadurch gekennzeichnet ist, dass**
die Rückstellung der Mobilitätsparameter des zugehörigen Algorithmus umfasst, einen Deltawert ungültig zu machen, der von dem zugehörigen Algorithmus erzeugt wurde, wobei der Deltawert jeweils von dem Mobilitätsrobustheit-Optimierungsalgorithmus und dem Mobilitäts-Lastverteilungsalgorithmus erzeugt worden ist und wobei ein wirksamer Deltawert für das Übergabeverfahren zwischen der Ursprungszelle (110) und der wenigstens einen benachbarten zielzelle (120) aus einer Summe des Deltawerts des Mobilitätsrobustheit-Optimierungsalgorithmus und des Deltawerts des Mobilitäts-Lastverteilungsalgorithmus besteht und wobei der Auslöserwert zum Anstoßen des Übergabeverfahrens durch den wirksamen Deltawert angepasst wird.

2. Verfahren nach Anspruch 1, ferner umfassend das Anpassen des Auslöserwerts als Reaktion auf die Rückstellung der Mobilitätsparameter des zugehörigen Algorithmus.

3. Verfahren nach einem der vorstehenden Ansprüche, ferner umfassend
zu bestimmen, ob eine Rückstellung der Mobilitätsparameter für den Mobilitätsrobustheit-Optimierungsalgorithmus oder den Mobilitäts-Lastverteilungsalgorithmus notwendig ist.

4. Verfahren nach Anspruch 1, wobei das Ungültigmachen des Deltawerts umfasst, den Deltawert auf null zu setzen.

5. Verfahren nach einem der vorstehenden Ansprüche, wobei die Nachricht eine Mobilitätsänderung-Stornierungsnachricht ist, die Informationen umfasst, um die Ursprungszelle (110) oder die wenigstens eine Nachbarzelle (120) zu zwingen, die Mobilitätsparameter des zugehörigen Algorithmus zurückzustellen.

6. Verfahren nach einem der vorstehenden Ansprüche, wobei die Nachricht ein Informationselement umfasst, das die Rückstellung der Mobilitätsparameter des zugehörigen Algorithmus anzeigt.

7. Basisstation (111, 121), die dafür ausgelegt ist, Mobilitätsparameter zurückzustellen, die in zusammenhang mit einem Übergabeverfahren für ein Benutzer-Equipment (112) zwischen einer Ursprungszelle (110) und einer Zielzelle (120) in einem Mobilfunknetzsystem (100) stehen, wobei das Mobilfunknetzsystem (100) die Ursprungszelle (110) und wenigstens eine benachbarte Zielzelle (120) umfasst, wobei das Übergabeverfahren durch einen Auslöserwert angestoßen wird, wobei ein Auslöserwert jeder der wenigstens einen benachbarten Zielzellen (120) in Relation zur Ursprungszelle (110) zugewiesen wird, wobei der Auslöserwert von Mobilitätsparametern abhängt, die durch einen Mobilitätsrobustheit-Optimierungsalgorithmus veränderbar sind, und von Mobilitätsparametern abhängt, die durch einen Mobilitäts-Lastverteilungsalgorithmus veränderbar sind, wobei die Basisstation (111, 121) umfasst,
eine Rückstelleinheit (602, 606), die dafür ausgelegt ist, die Mobilitätsparameter für den Mobilitätsrobustheit-Optimierungsalgorithmus oder den Mobilitäts-Lastverteilungsalgorithmus zurückzustellen,
eine Erzeugungseinheit (603, 607), die dafür ausgelegt ist, eine Nachricht zu erzeugen, die Informationen über die Rückstellung der Mobilitätsparameter umfasst, die dem Mobilitätsrobustheit-Optimierungsalgorithmus oder dem Mobilitäts-Lastverteilungsalgorithmus zugeordnet sind, und die Informationen über den zugehörigen Algorithmus umfasst, und eine Sendeeinheit (601, 605), die dafür ausgelegt ist, die Nachricht zwischen der Ursprungszelle (110) und der wenigstens einen Nachbarzelle (120) zu übertragen, um die Mobilitätsparameter des zugehörigen Algorithmus basierend auf der empfangenen Nachricht zurückzustellen, **dadurch gekennzeichnet, dass** die Rückstelleinheit (602, 606), die dafür ausgelegt ist, die Mobilitätsparameter des zugehörigen Algorithmus zurückzustellen, ferner dafür ausgelegt ist, einen Deltawert ungültig zu machen, der von dem zugehörigen Algorithmus erzeugt wurde, wobei der Deltawert jeweils von dem Mobilitätsrobustheit-Optimierungsalgorithmus und dem Mobilitäts-Lastverteilungsalgorithmus erzeugt worden ist und wobei ein wirksamer Deltawert für das Übergabeverfahren zwischen der Ursprungszelle (110) und der wenigstens einen benachbarten Zielzelle (120) aus einer Summe des Deltawerts des Mobilitätsrobustheit-Optimierungsalgorithmus und des Deltawerts des Mobilitäts-Lastverteilungsalgorithmus besteht und wobei der Auslöserwert zum Anstoßen des Übergabeverfahrens durch den wirksamen Deltawert angepasst wird.

8. Mobilfunknetzsystem (100), wobei das Mobilfunknetzsystem (100) wenigstens eine Basisstation (111, 121) nach Anspruch 7 umfasst.

## Revendications

1. Procédé de réinitialisation de paramètres de mobilité étant associés avec une procédure de transfert intercellulaire pour un équipement d'utilisateur (112) entre une cellule source (110) et une cellule cible (120) au sein d'un système de réseau cellulaire (100), le système de réseau cellulaire (100) comprenant la cellule source (110) et au moins une cellule cible (120) voisine, dans lequel la procédure de transfert intercellulaire est initiée par une valeur de déclenchement, dans lequel une valeur de déclenchement est affectée à chacune de l'au moins une cellule cible (120) voisine en relation avec la cellule source (110), dans lequel la valeur de déclenchement dépend de paramètres de mobilité étant adaptables par un algorithme d'optimisation de robustesse de mobilité et dépend de paramètres de mobilité étant adaptables par un algorithme d'équilibrage de charge de mobilité, le procédé comprenant
la réinitialisation des paramètres de mobilité pour l'algorithme d'optimisation de robustesse de mobilité ou l'algorithme d'équilibrage de charge de mobilité,
la génération d'un message comprenant des informations relatives à la réinitialisation des paramètres de mobilité étant associés avec l'algorithme d'optimisation de robustesse de mobilité ou l'algorithme d'équilibrage de charge de mobilité et comprenant des informations relatives à l'algorithme associé, et
la transmission du message entre la cellule source (110) et l'au moins une cellule (120) voisine pour réinitialiser les paramètres de mobilité de l'algorithme associé sur la base du message reçu
le procédé **caractérisé en ce que**
la réinitialisation des paramètres de mobilité de l'algorithme associé comprend l'invalidation d'une valeur delta, qui a été générée par l'algorithme associé, dans lequel la valeur delta a été générée par chacun de l'algorithme d'optimisation de robustesse de mobilité et de l'algorithme d'équilibrage de charge de mobilité, et dans lequel une valeur delta effective pour la procédure de transfert intercellulaire entre la cellule source (110) et l'au moins une cellule cible (120) voisine consiste en une somme de la valeur delta de l'algorithme d'optimisation de robustesse de mobilité et de la valeur delta de l'algorithme d'équilibrage de charge de mobilité et dans lequel la valeur de déclenchement pour initier la procédure de transfert intercellulaire est adaptée par la valeur delta effective.

2. Procédé selon la revendication 1, comprenant en outre l'adaptation de la valeur de déclenchement en réponse à la réinitialisation des paramètres de mobilité de l'algorithme associé.

3. Procédé selon l'une quelconque des revendications précédentes, comprenant en outre
la détermination si une réinitialisation des paramètres de mobilité est nécessaire pour l'algorithme d'optimisation de robustesse de mobilité ou l'algorithme d'équilibrage de charge de mobilité.

4. Procédé selon la revendication 1, dans lequel l'invalidation de la valeur delta comprend la fixation de la valeur delta à zéro.

5. Procédé selon l'une quelconque des revendications précédentes, dans lequel le message est un message d'annulation de changement de mobilité comprenant des informations pour forcer la cellule source (110) ou l'au moins une cellule (120) voisine à réinitialiser les paramètres de mobilité de l'algorithme associé.

6. Procédé selon l'une quelconque des revendications précédentes, dans lequel le message comprend un élément d'information indiquant la réinitialisation des paramètres de mobilité de l'algorithme associé.

7. Station de base (111, 121) étant adaptée à réinitialiser des paramètres de mobilité étant associés avec une procédure de transfert intercellulaire pour un équipement d'utilisateur (112) entre une cellule source (110) et une cellule cible (120) au sein d'un système de réseau cellulaire (100), le système de réseau cellulaire (100) comprenant la cellule source (110) et au moins une cellule cible (120) voisine, dans laquelle la procédure de transfert intercellulaire est initiée par une valeur de déclenchement, dans laquelle une valeur de déclenchement est affectée à chacune de l'au moins une cellule cible (120) voisine en relation avec la cellule source (110), dans laquelle la valeur de déclenchement dépend de paramètres de mobilité étant adaptables par un algorithme d'optimisation de robustesse de mobilité et dépend de paramètres de mobilité étant adaptables par un algorithme d'équilibrage de charge de mobilité, la station de base (111, 121) comprenant
une unité de réinitialisation (602, 606) étant adaptée à réinitialiser les paramètres de mobilité pour l'algorithme d'optimisation de robustesse de mobilité ou l'algorithme d'équilibrage de charge de mobilité,
une unité de génération (603, 607) étant adaptée à générer un message comprenant des informations relatives à la réinitialisation des paramètres de mobilité étant associés avec l'algorithme d'optimisation de robustesse de mobilité ou l'algorithme d'équilibrage de charge de mobilité et comprenant des informations relatives à l'algorithme associé, et
une unité de transmission (601, 605) étant adaptée à transmettre le message entre la cellule source (110) et l'au moins une cellule (120) voisine pour réinitialiser les paramètres de mobilité de l'algorithme associé sur la base du message reçu, **caractérisée en ce que** l'unité de réinitialisation (602, 606) adaptée à réinitialiser les paramètres de mobilité de l'algorithme associé est en outre adaptée à invalider une valeur delta, qui a été générée par l'algorithme associé, dans laquelle la valeur delta a été générée par chacun de l'algorithme d'optimisation de robustesse de mobilité et de l'algorithme d'équilibrage de charge de mobilité, et dans laquelle une valeur delta effective pour la procédure de transfert intercellulaire entre la cellule source (110) et l'au moins une cellule cible (120) voisine consiste en une somme de la valeur delta de l'algorithme d'optimisation de robustesse de mobilité et de la valeur delta de l'algorithme d'équilibrage de charge de mobilité et dans laquelle la valeur de déclenchement pour initier la procédure de transfert intercellulaire est adaptée par la valeur delta effective.

8. Système de réseau cellulaire (100), le système de réseau cellulaire (100) comprenant au moins une station de base (111, 121) selon la revendication 7.
